# EUROPÄISCHE PATENTSCHRIFT

(11) **EP 1 586 228 B1**
(45) Veröffentlichungstag und Bekanntmachung des Hinweises auf die Patenterteilung: **14.11.2007**
(21) Anmeldenummer: 05000432.4
(22) Anmeldetag: 12.01.2005
(51) Int. Cl.: A01B 1/22, F16B 7/18

(54) **Gewindeverbindung, insbesondere zur Befestigung eines Werkzeugs oder eines Werkzeugadapters, an einer Verlängerungseinrichtung**
Thread connection, in particular to the attachment of a tool or a tool adapter, at an extension mechanism
Raccordement de fil, en particulier à l'attachement d'un outil ou d'un adapteur d'outil, à un mécanisme de prolongation

(30) Priorität: 16.04.2004 DE 102004019237
(43) Veröffentlichungstag der Anmeldung: 19.10.2005
(73) Patentinhaber: Ciret Holdings AG, 88239 Wangen (DE)
(72) Erfinder: Sauer, Helmut, 88279 Amtzell (DE)
(74) Vertreter: Otten, Herbert

(56) Entgegenhaltungen:
- GB-A- 789 697
- US-A- 5 690 181
- US-A- 5 897 277

## Beschreibung

Die vorliegende Erfindung betrifft eine Gewindeverbindung nach dem Oberbegriff des Anspruchs 1 (US-A-5690181).

Um Werkzeuge, insbesondere Farbroller, besser bedienen zu können, ist es bekannt, diese mit einer Verlängerungseinrichtung zu verbinden. Dadurch kann der Farbroller nicht nur an dem an ihm ausgebildeten Griff gehalten und geführt werden, sondern vorteilhafterweise über den gesamten Bereich der Verlängerungseinrichtung hinweg.

Als Verbindung zwischen dem Farbroller und der Verlängerungseinrichtung ist es bekannt, eine Gewindeverbindung zu verwenden. Der dem Farbroller zugeordnete Teil der Gewindeverbindung kann entweder direkt im Griff des Farbrollers angeordnet sein oder an einem entsprechenden Adapter, auf dem ein Farbroller oder ein anderes Werkzeug angeordnet werden kann. An der Verlängerungseinrichtung ist der komplementäre Teil der Gewindeverbindung ausgebildet.

Bei der Bedienung des Farbrollers kommt es jedoch immer wieder vor, dass sich die Gewindeverbindung löst, was sich nachteilig auf die Handhabung des Farbrollers auswirkt.

### Aufgabe und Vorteile der Erfindung

Aufgabe der Erfindung ist es daher, den Bedienkomfort der Gewindeverbindung zu verbessern.

Diese Aufgabe wird durch die Merkmale des Anspruchs 1 gelöst. In den Unteransprüchen sind vorteilhafte und zweckmäßige Verbesserungen und Weiterbildungen des Gegenstandes des Anspruchs 1 angegeben.

Erfindungsgemäß wird deshalb eine Gewindeverbindung nach dem Oberbegriff des Anspruchs 1 vorgeschlagen, deren Kern darin liegt, dass das Werkzeug oder der Werkzeug-Adapter mittels einer formschlüssigen Schnappverbindung an der Verlängerungseinrichtung arretiert wird.

Der Vorteil einer solchen Arretierung liegt darin, dass auf den Farbroller während seiner Verwendung, bezogen auf die Längsachse der Verlängerungseinrichtung, auch drehende Bewegungen übertragen werden können, ohne dass sich die Gewindeverbindung löst.

Die Arretierung der Gewindeverbindung ist in einer bevorzugten Ausführungsform als Schnappmechanismus mit zwei formschlüssig ineinander eingreifenden Elementen ausgebildet, die unter vorübergehender Überwindung elastischer Rückstellkräfte ineinandergefügt werden können.

Bei dieser rückstell-elastischen Verbindung erfolgt lediglich kurzzeitig ein Versatz oder eine Verformung wenigstens eines Arretierelementes, welches danach wieder in seine ursprüngliche Lage und/oder Form zurückkehrt.

In einer demgegenüber abgewandelten Ausführungsform kann die arretierende, formschlüssige Verbindung aber auch als eine Schiebeverbindung, z.B. ohne elastische Rückstellkräfte, ausgebildet sein. Die Fixierung erfolgt dabei durch eine Verschiebung des entsprechenden Arretierelementes, so dass es mit seinem Gegenstück zusammenwirkt.

In einer Weiterbildung kann die Schnappverbindung aus einem Nocken, einer Nase oder dergleichen und einer eine entsprechende Gegenform aufweisenden Aussparung bestehen. Vorteilhafterweise ist der Nocken dazu in Bezug auf die Aussparung derart ausgerichtet angeordnet, dass die beiden genau dann ineinander einschnappen, wenn die aus Gewindebolzen und Gewindebuchse bestehende Gewindeverbindung beim Zusammenschrauben in ihre festgeschraubte Position gelangt.

Weiter vorteilhaft kann zur Ausbildung eines elastischen Übergangs beim Festsetzen des Gewindebolzens in der Gewindebuchse ein elastisches Widerlager vorgesehen sein, beispielsweise in der Form eines Gummis, der entweder das Festziehmoment dämpft und/oder den Bereich aufweitet, in welchem sich der Gewindebolzen in der Gewindebuchse festsetzt. Dieser Bereich betrifft sowohl den axialen Versatz als auch den radialen Versatz des Gewindebolzens gegenüber der Gewindebuchse, so dass dadurch eine größere Toleranz bei der Festsetzung des Nockens in der Aussparung erreicht werden kann.

Um die Schnappverbindung wieder lösen zu können, kann diese in einer nächsten Ausführungsform eine Handhabeeinrichtung umfassen, wie beispielsweise einen Betätigungshebel, eine Greiffläche oder dergleichen. Durch Betätigen der Handhabeeinrichtung wird die Arretierung aufgehoben und das Werkzeug kann wieder von der Verlängerungseinrichtung getrennt werden.

Die Handhabeeinrichtung kann dazu federbelastet ausgebildet sein oder selbst einen guten Halt ausbilden, um den Trennvorgang zu erleichtern.

In einer besonders bevorzugten Ausführungsform kann entweder der Nocken und/oder die Aussparung axial verschiebbar sein, um die Arretierwirkung der Schnappverbindung herzustellen bzw. wieder aufzuheben. Vorzugsweise geschieht dies mittels einer gegen die Kraft eines elastischen Rückstellmittels, insbesondere einer Feder, verschiebbaren Arretierhülse. An der Arretierhülse kann dabei entweder der Nocken oder die Aussparung ausgebildet sein. In besonderen Ausführungsformen ist es auch möglich, dass neben einer ersten auch noch eine zweite Arretiereinrichtung in Form von ineinanderwirkenden Nocken und Aussparungen, z.B. zur Verstärkung der Arretierung, ausgebildet ist. In diesem Fall ist es vorteilhaft, wenn die beiden Arretierungen so ausgebildet sind, dass deren Nocken nur eindeutig zugeordnet in die jeweils zugeordnete Aussparung einrasten kann. Dadurch kann sichergestellt werden, dass eine ganze Gewindesteigung, also eine beinahe 360°-Verdrehung des Gewindebolzens in der Gewindebuchse, zum Vorspannen der Arretierung durch Verschieben der Arretierhülse ermöglicht werden kann, bevor die Nocken in die zugehörigen Aussparungen einrasten und die Gewindeverbindung drehfest festsetzen.

In einer besonders bevorzugten Ausführungsform kann der Nocken auf die Arretierhülse beim Einschrauben des Gewindebolzens in die Gewindebuchse axial verschiebend wirken. Der Nocken kann dabei sowohl auf der Arretierhülse als auch am entsprechenden Gegenstück angeordnet sein.

Um sicherzustellen, dass die Arretierhülse in ihrer Drehlage beim Zusammenschrauben der Gewindeverbindung zu dem ihr zugeordneten Element der Gewindeverbindung positionsstabil bleibt, kann für sie eine Verdrehsicherung ausgebildet sein. In Verschieberichtung sorgt ein Anschlag für die Beschränkung der Bewegungsfreiheit. Der Anschlag ist dabei vorzugsweise federbelastet in der Form eines Spannstiftes ausgebildet. Dadurch wird eine einfache Montage der Arretierhülse, beispielsweise an der Verlängerungseinrichtung, ermöglicht.

Bei einer demgegenüber abgewandelten Ausführungsform der Arretierung kann ein Arretiermittel bei seiner Betätigung auch einen radialen Versatz ausführen und in sein Gegenstück eingreifen. Der Nocken und/oder die Aussparung der Schnappverbindung kann zusätzlich eine schräge Kante oder Fläche aufweisen. Damit ist es möglich, die Arretierwirkung der Schnappverbindung mit Hilfe der schrägen Kante oder Fläche bei Einwirkung einer Drehkraft leichter zu lösen, wobei jedoch sichergestellt sein muss, dass die Arretierkraft noch ausreichend groß ist, so dass eine einwandfreie Handhabung des Farbrollers gewährleistet ist.

Als Ausführungsformen sind dabei Ausbildungen möglich, bei denen der Nocken radial auswärts oder radial einwärts in die entsprechend zugeordnete Aussparung einschnappt. Selbstverständlich ist auch eine Kombination solcher Ausführungsformen möglich.

Eine weitere Ausführungsform kann beispielsweise dadurch realisiert werden, dass die Aussparung als Nut oder Loch ausgebildet ist. Die Nut kann gegenüber dem Loch den Vorteil haben, dass sie rundumlaufend ausgebildet sein kann, so dass dadurch auch größere Fertigungstoleranzen zulässig sind. Das Loch kann gegenüber der Nut den Vorteil haben, dass es gegebenenfalls einfacher ausgebildet werden kann.

### Zeichnungen

Weitere Einzelheiten und Vorteile der Erfindung werden in den Zeichnungen anhand von schematisch dargestellten Ausführungsbeispielen beschrieben.

Im Einzelnen zeigen:
- Figur 1: ganz allgemein eine Gewindeverbindung für die Befestigung eines Werkzeuges, welches im dargestellten Beispiel ein Farbroller ist, an einer Verlängerungseinrichtung;
- Figur 2: eine Gewindeverbindung wie in Figur 1, jedoch anstelle des Werkzeugs einen Adapter für ein Werkzeug;
- Figur 3: eine Schnittdarstellung der Gewindeverbindung in getrenntem Zustand der beiden Gewindeteile;
- Figuren 4, 5: jeweils eine schräge Draufsicht auf eine Gewindeverbindung in arretiertem Zustand in geschnittener (Figur 4) und in nicht geschnittener (Figur 5) Darstellung;
- Figuren 6a, 6b, 7, 8, 8a, 8b: zeigen verschiedene Ausführungsformen von Arretierungen und diese wieder lösende Handhabungseinrichtungen.

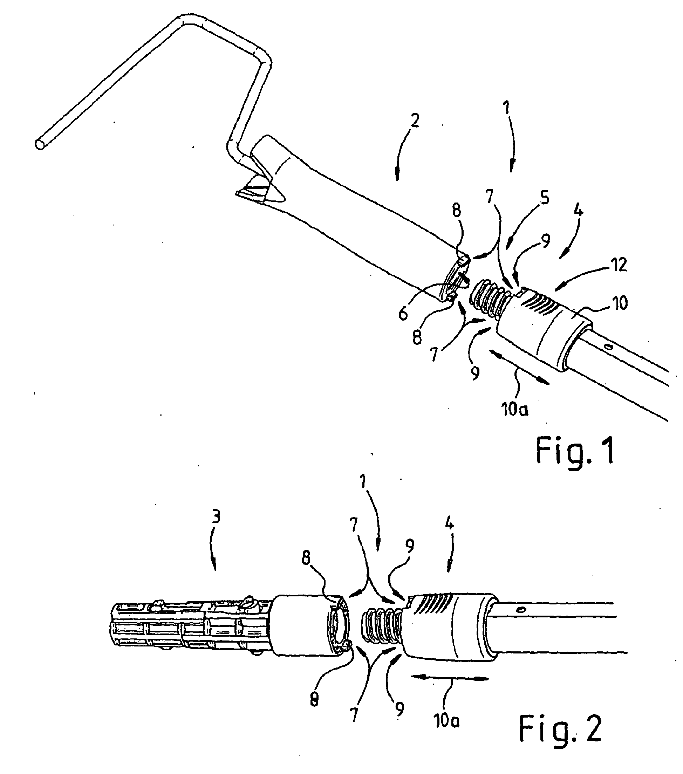

Figur 1 zeigt eine Gewindeverbindung 1 zwischen einem Werkzeug 2 und einer Verlängerungseinrichtung 4. Im vorliegenden Fall ist das Werkzeug 2 ein Farbroller, an dessen dem Bügel für die Farbrolle gegenüberliegenden Stirnseite des Griffs eine Gewindebuchse 6 angebracht ist. In diese kann ein Gewindebolzen 5 der Verlängerungseinrichtung 4 so weit eingeschraubt werden, bis die Verlängerungseinrichtung 4 fest mit dem Werkzeug 2 verbunden ist.

Als Arretierung für die Gewindeverbindung 1 ist eine formschlüssige Schnappverbindung 7 ausgebildet, die werkzeugseitig einen Nocken 8 und an der Seite der Verlängerungseinrichtung 4 eine dem Nocken zugeordnete Aussparung 9 aufweist.

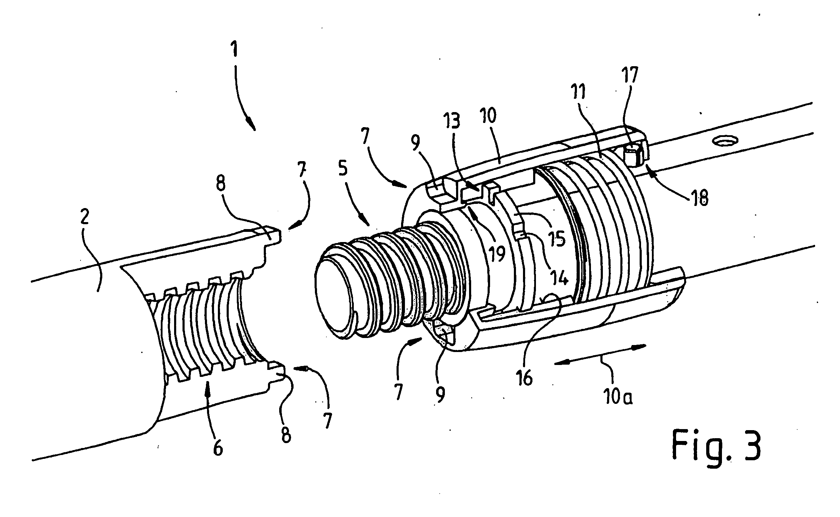

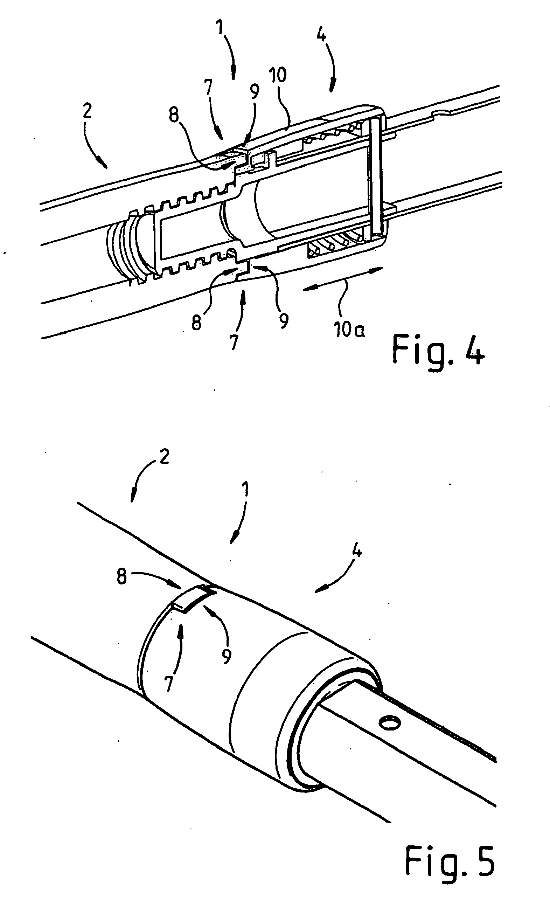

In Figur 1 sind zwei sich radial etwa gegenüberliegend angeordnete Schnappverbindungen 7 gezeigt. Um die Nocken 8 in die Aussparungen 9 einrasten zu können, kann die Arretierhülse 10 während des Zusammenschraubens der Verlängerungseinrichtung 4 mit dem Griff des Werkzeugs 2 entsprechend der Pfeilrichtung 10a federbelastet nach rechts verschoben werden. Wenn die gegenüber der Verlängerungseinrichtung drehfeste aber axial verschiebbare Arretierhülse 10 gegenüber dem Werkzeug so weit verdreht ist, dass die dem Nocken 8 zugeordnete Aussparung in Übereinstimmung mit dem Nocken 8 ist, schnappt sie unter Federkraft wieder gegen die Richtung der zuvor ausgeführten Verschiebebewegung zurück und nimmt den Nocken 8 in sich auf, um die Arretierung der Gewindeverbindung 1 herzustellen. Weitere Details sind den Figuren 3 und 4 zu entnehmen.

Um das Lösen der Schnappverbindung 7 zu erleichtern, ist an der Arretierhülse 10 eine Handhabeeinrichtung 12 ausgebildet, mittels derer sie wiederum axial in eine Richtung des Pfeiles 10a nach rechts zurückgezogen werden kann, so dass der Eingriff des Nockens 8 in der Aussparung 9 aufgehoben wird, wonach die Verlängerungseinrichtung 4 wiederum in entgegengesetzter Richtung relativ zum Werkzeug verdreht und somit aufgeschraubt werden kann.

Die Figur 2 zeigt grundsätzlich denselben Aufbau einer Gewindeverbindung 1 mit Gewindebolzen 5 und Gewindebuchse 6 sowie einer Arretierung in der Form einer formschlüssigen Schnappverbindung 7. Der Unterschied zwischen den Figuren 1 und 2 liegt darin, dass in Figur 1 ein Werkzeug 2 von der Verlängerungseinrichtung 4 aufgenommen ist und in der Figur 2 ein Werkzeug-Adapter 3. Dieser Werkzeug-Adapter 3 erweitert die Variationsmöglichkeit der Gewindeverbindung 1.

Die Figur 3 zeigt weitere Details der Gewindeverbindung. Um sicherzustellen, dass sich die Arretierhülse 10 nicht gegenüber der Längsachse der Verlängerungseinrichtung 4 beim Einschrauben des Gewindebolzens 5 in die Gewindebuchse 6 verdreht, weist diese eine Verdrehsicherung 13 auf. Diese Verdrehsicherung 13 wird zwischen einem in einem Sicherungsring 15 angeordneten Schlitz 14 und einer in diesen Schlitz eingreifenden Rippe 16 ausgebildet. Der Sicherungsring 15 ist dabei drehfest mit der Verlängerungseinrichtung 4 verbunden.

Die Arretierhülse 10 kann also lediglich in axialer Richtung durch Verschieben der Rippe 16 im Schlitz 14 gegen die Federkraft der Feder 11 verschoben werden, die sich ihrerseits gegen den radial in die Verlängerungsrichtung 4 eingesetzten, federbelasteten Spannstift 17 axial abstützt. Die Arretierhülse 10 weist zusätzlich noch zwei Anschläge 18, 19 auf, wobei der Anschlag 18 gegenüber dem Spannstift 17 als an der Arretierhülse stirnseitig angeordneter, nach innen weisender Flansch ausgebildet ist. Der Anschlag 19 ist an der dieser gegenüberliegenden Stirnseite der Arretierhülse 10 gegenüber dem Sicherungsring 15 wiederum als radial nach innen weisender Flansch ausgebildet. Die Arretierhülse kann somit zwischen diesen beiden Anschlagspositionen axial verschoben werden.

Die beiden Schnappverbindungen 7 sind so ausgebildet, dass jeder Nocken 8, bedingt durch jeweils unterschiedliche radiale Abstände zur Längsachse der Gewindeverbindung, nur in die ihm zugeordnete Aussparung 9 einrasten kann.

Die Figur 4 zeigt diese Verbindung nun in arretiertem, also zusammengefügtem Zustand. Auch hier ist erkennbar, dass die obere Schnappverbindung 7, wie in Figur 3 beschrieben, sich von der unteren Schnappverbindung 7 unterscheidet.

Die Figur 5 zeigt diese Gewindeverbindung in nicht geschnittener Darstellung in schräger Draufsicht. Gut erkennbar ist wiederum die Ausbildung der Arretierung durch die formschlüssige Schnappverbindung 7 mittels des Nockens 8, welcher in die ihm zugehörige Aussparung 9 eingerastet ist.

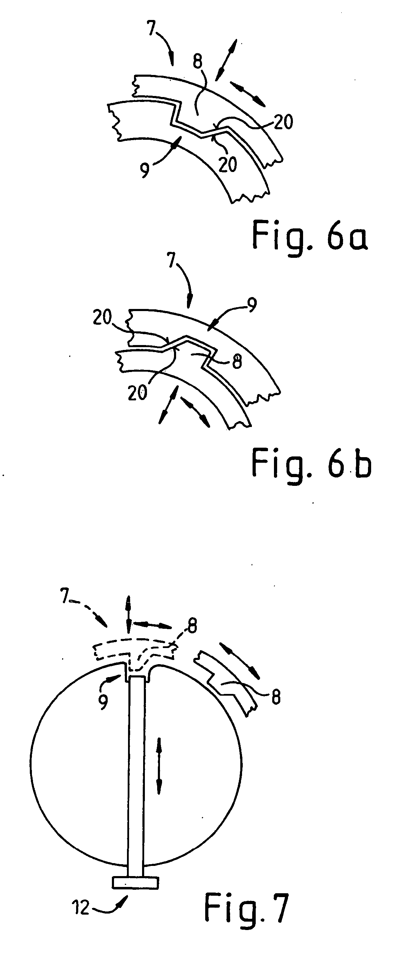

Die Figuren 6a und 6b zeigen als Teilausschnitte weitere Möglichkeiten einer elastischen Schnappverbindung, bei der wiederum ein Nocken 8 in eine ihm zugehörige Aussparung 9 einrastet. Gegenüber der vorigen Ausführungsform ist es hier jedoch vorgesehen, dass die Arretierung durch Verdrehen des Nockens an der der Aussparung zugeordneten Oberfläche des Gegenstücks erfolgt. Dazu muss das den Nocken aufweisende Arretierelement vorübergehend gegenüber dem die Aussparung 9 aufweisenden Arretierelement elastisch verformt werden, bis die beiden durch Einschnappen ineinander greifen. Um ein Lösen dieser Arretierung zu erleichtern, weisen in diesen beiden Ausführungsformen 6a und 6b sowohl der Nocken 8 als auch die Aussparung 9 jeweils eine schräge Fläche 20 auf. Diese schräge Fläche 20 bezieht sich auf den Querschnitt des dargestellten Ausführungsbeispiels. Selbstverständlich handelt es sich hierbei um zwei sich gegenüberliegende, schräg angeordnete Flächen, die die Rückstellkraft beim Lösen der Arretierung so weit reduziert, dass sie leicht zu lösen ist und dennoch bei der Verwendung des Werkzeugs dieses einwandfrei sichert.

Gemäß der Darstellung der Figur 6a ist die Schnappverbindung so ausgebildet, dass der Nocken 8 radial einwärts in die Aussparung einschnappt, und gemäß der Darstellung der Figur 6b rastet dieser Nocken radial auswärts in die ihm zugeordnete Aussparung 9 ein.

Die Figur 7 zeigt eine weitere Ausführungsform, bei der der Nocken 8 radial einwärts in die ihm zugeordnete Aussparung einschnappt. Zum Lösen ist hier eine Handhabevorrichtung 12 angeordnet, die von der radial gegenüberliegenden Seite von innen her den Nocken nach außen drückt, so dass die Arretierung gelöst ist. Zusätzlich ist auch hier die der Kante 20 zugeordneten Seite der Aussparung 9 abgerundet, so dass das Lösen der Arretierung erleichtert wird.

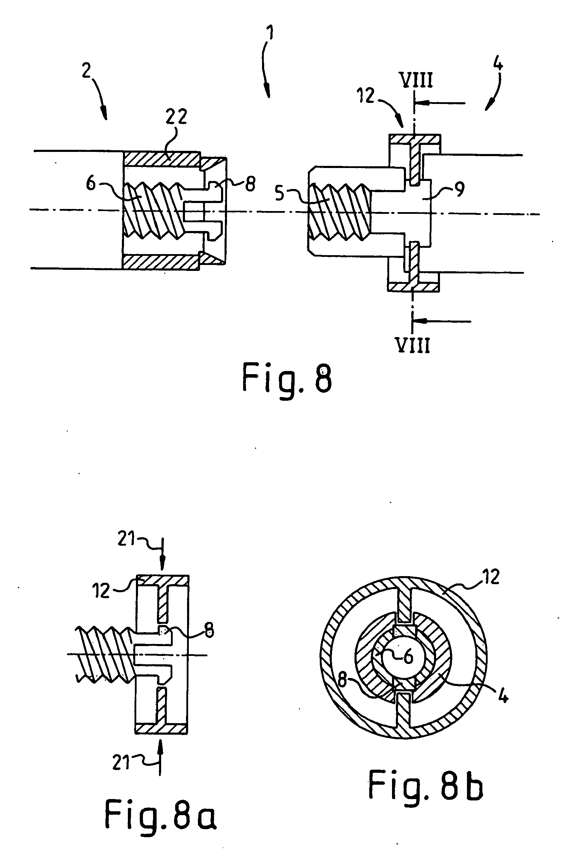

Die Figuren 8, 8a und 8b zeigen eine weitere Ausführungsform einer Arretierung für eine Gewindeverbindung. Hierbei ist beispielhaft im Inneren des Griffs für das Werkzeug 2 der Gewindebolzen 6 angeordnet, welcher gegebenenfalls von einer Hülse 22 umgeben sein kann, um ein bedienfreundlicheres Griffende auszubilden. Stirnseitig sind am Gewindebolzen 6 Nocken 8 an elastischen Zungen angeordnet, so dass diese radial einwärts verbogen werden können. Beim Einschrauben des Gewindebolzens 6 in die Gewindebuchse 5 werden zuerst die Nocken 8 eingeführt und radial einwärts zusammengedrückt. Wenn der Gewindebolzen vollständig in der Gewindebuchse 5 eingeschraubt ist, schnappen die Nocken 8 radial auswärts in die zugeordnete Aussparung 9. Diese Aussparung 9 kann nun entweder eine rundumlaufende Nut sein oder an entsprechenden Stellen angeordnete Löcher. Diese Löcher können Bohrungen, Aussparungen oder etwas Ähnliches sein.

Zum Lösen dieser Arretierung ist wiederum eine Handhabevorrichtung 12 vorgesehen, die in diesem Fall in der Form eines Ringes ausgebildet ist, welcher nach innen weisende Stifte aufweist. Diese Stifte drücken nach der Darstellung in der Figur 8a beim Zusammendrücken des Ringes die beiden Nocken 8 in Richtung der Pfeile 21 radial zusammen, so dass diese wieder in Richtung der Gewindebuchse 5 axial herausgeschraubt werden können.

Die Darstellung der Figur 8b ist eine Schnittdarstellung in der Ebene VIII-VIII in der Figur 8.

Selbstverständlich sind noch weitere Ausführungsformen einer Arretierung denkbar, so dass die hier dargestellten Ausführungsformen nur beispielhaft und nicht beschränkend anzusehen sind.

Zum Beispiel kann die Schiebeverbindung durch eine abgewandelte Form der Schnappverbindung 7 realisiert sein, bei der die Arretierhülse 10 ohne die rückstellende Feder 11 an der Gewindeverbindung 1 angeordnet ist. Das Ineinandergreifen der Nocken 8 und der Aussparung 9, zum Zwecke der Arretierung des Werkzeugs 2 an der Verlängerungseinrichtung 4, wird dann bei dieser Ausführungsform nicht durch verschieben der Arretierhülse mittels einer Feder sondern durch manuelles verschieben bewirkt.

### Bezugszeichenliste:

- 1: Gewindeverbindung
- 2: Werkzeug
- 3: Werkzeug-Adapter
- 4: Verlängerungseinrichtung
- 5: Gewindebolzen
- 6: Gewindebuchse
- 7: Schnappverbindung
- 8: Nocken
- 9: Aussparung
- 10: Arretierhülse
- 10a: Pfeil
- 11: Feder
- 12: Handhabevorrichtung
- 13: Verdrehsicherung
- 14: Schlitz
- 15: Sicherungsring
- 16: Rippe
- 17: Spannstift
- 18: Anschlag
- 19: Anschlag
- 20: Schrägekante
- 21: Pfeil
- 22: Hülse

## Patentansprüche

1. Gewindeverbindung (1), umfassend:
- einen ersten, einem Werkzeug (2) oder einem Werkzeug-Adapter (3) zugeordneten Gewindeverbindungsteil und
- einen zweiten, einer Verlängerungseinrichtung (4) zugeordneten Gewindeverbindungsteil,
wobei der erste Gewindeverbindungsteil ein Gewindebolzen (5) oder eine Gewindebuchse (6) ist, und der zweite Gewindeverbindungsteil eine dazu komplementäre Gewindebuchse (6) bzw. ein dazu komplementärer Gewindebolzen (5),
wobei zur Verbindung des ersten Gewindeverbindungsteils mit dem zweiten Gewindeverbindungsteil der Gewindebolzen (5) in die Gewindebuchse (6) eingreift,
und wobei zur Arretierung zwischen dem dem Werkzeug (2) oder dem Werkzeug-Adapter (3) zugeordneten, ersten Gewindeverbindungsteil und dem der verlängerungseinrichtung (4) zugeordneten, zweiten Gewindeverbindungsteil eine als Schnappverbindung (7) oder als Schiebeverbindung ausgebildete, formschlüssigen Verbindung (7) vorgesehen ist, welcher eine Handhabeeinrichtung (12) zugeordnet ist, die das Lösen der Arretierung erleichtert, **dadurch gekennzeichnet, dass** der Handhabeeinrichtung (12) ein elastisch verformbares Rückstellmittel (11) zugeordnet ist, gegen dessen Kraft die Arretierwirkung der formschlüssige Verbindung (7) lösbar ist.

2. Gewindeverbindung nach Anspruch 1, **dadurch gekennzeichnet, dass** die Schnappverbindung (7) einen Nocken (8) aufweist, der dann arretierend in eine Aussparung (9) einschnappt, wenn der Gewindebolzen (5) in der Gewindebuchse (6) in seiner festgezogenen Position eingeschraubt ist.

3. Gewindeverbindung nach einem der vorangehenden Ansprüche, **dadurch gekennzeichnet, dass** der Nocken (8) und/oder die Aussparung (9) der Schnappverbindung (7) axial verschiebbar ist, vorzugsweise mittels einer gegen die Kraft einer Feder (11) verschiebbaren Arretierhülse (10).

4. Gewindeverbindung nach einem der vorangehenden Ansprüche, **dadurch gekennzeichnet, dass** der Nocken (8) die Arretierhülse (10) beim zusammenschrauben der Gewindeverbindung (1) axial verschiebt.

5. Gewindeverbindung nach einem der vorangehenden Ansprüche, **dadurch gekennzeichnet, dass** die Arretierhülse (10) eine Verdrehsicherung (13) und/oder in Verschieberichtung einen Anschlag (18; 19) aufweist, wobei vorzugsweise ein Anschlag (18) als federbelasteter Spannstift (17) ausgebildet ist.

6. Gewindeverbindung nach einem der vorangehenden Ansprüche 1 bis 3, **dadurch gekennzeichnet, dass** der Nocken (8) und/oder die Aussparung (9) der Schnappverbindung (7) eine schräge Kante (20) aufweist, die bei ausreichender Krafteinwirkung durch Verdrehen des Werkzeugs (2) oder des Werkzeug-Adapters (3) gegen die Verlängerungseinrichtung (4) die Arretierwirkung der Schnappverbindung (7) löst.

7. Gewindeverbindung nach einem der Ansprüche 1, 2 oder 6, **dadurch gekennzeichnet, dass** der Nocken (8) der Schnappverbindung (7) radial einwärts in die Aussparung (9) einschnappt.

8. Gewindeverbindung nach einem der Ansprüche 1, 2 oder 6, **dadurch gekennzeichnet, dass** der Nocken (8) der Schnappverbindung (7) radial auswärts in die Aussparung (9) einschnappt .

9. Gewindeverbindung nach einem der Ansprüche 1, 2 oder 6 bis 8, **dadurch gekennzeichnet, dass** die Aussparung (9) als Nut ausgebildet ist.

10. Gewindeverbindung nach einem der Ansprüche 1, 2 oder 6 bis 8, **dadurch gekennzeichnet, dass** die Aussparung (9) als Loch ausgebildet ist..

## Claims

1. Thread connection (1), comprising:
- a first thread connecting part allocated to a tool (2) or a tool adapter (3) and
- a second thread connecting part allocated to an extension device (4),
wherein the first thread connecting part is a threaded stud (5) or a threaded bush (6), and the second thread connecting part is a complementary threaded bush (6) or a complementary threaded stud (5),
wherein to connect the first thread connecting part with the second thread connecting part the threaded stud (5) engages with the threaded bush (6), and wherein to form a lock between the first thread connecting part allocated to the tool (2) or the tool adapter (3) and the second thread connecting part allocated to the extension device (4), a form-closed connection (7) designed as a snap connection (7) or as a sliding connection is provided, which is allocated a handling device (12) which facilitates the disconnection of the arresting mechanism, **characterised in that** the handling device (12) is allocated an elastically deformable restoring means (11) against the force of which the locking effect of the form-closed connection (7) can be released.

2. Thread connection according to claim 1, **characterised in that** the snap connection (7) comprises a cam (8) which then snap locks into a recess (9), when the threaded stud (5) is screwed in its tightened position into the threaded bush (6).

3. Thread connection according to one of the preceding claims, **characterised in that** the cam (8) and/or the recess (9) of the snap connection (7) is axially displaceable, preferably by means of a locking sleeve (10) that is displaceable against the force of a spring (11).

4. Thread connection according to one of the preceding claims, **characterised in that** the cam (8) axially displaces the locking sleeve (10) when the thread connection (1) is screwed together.

5. Thread connection according to one of the preceding claims, **characterised in that** the locking sleeve (10) has an anti-rotation locking means (13) and/or a stop (18; 19) in displacement direction, wherein preferably the stop (18) is designed in the form of a spring-loaded tightening pin (17).

6. Thread connection according to one of the preceding claims 1 to 3, **characterised in that** the cam (8) and/or the recess (9) of the snap connection (7) has a bevelled edge (20) which under the action of sufficient force by rotation of the tool (2) or the tool adapter (3) against the extension device (4) triggers the locking effect of the snap connection (7).

7. Thread connection according to one of claims 1, 2 or 6, **characterised in that** the cam (8) of the snap connection (7) snaps radially inwards into the recess (9).

8. Thread connection according to one of claims 1, 2 or 6, **characterised in that** the cam (8) of the snap connection (7) snaps radially outwards into the recess (9).

9. Thread connection according to one of claims 1, 2 or 6 to 8, **characterised in that** the recess (9) is designed as a groove.

10. Thread connection according to one of claims 1, 2 or 6 to 8, **characterised in that** the recess (9) is designed as a hole.

## Revendications

1. Raccordement par filetage (1) comprenant :
- une première partie de raccordement par filetage associée à un outil (2) ou un adaptateur d'outil (3), et
- une deuxième partie de raccordement par filetage associée à un dispositif de prolongation (4),
dans lequel la première partie de raccordement par filetage est un boulon fileté (5) ou une douille taraudée (6) et la deuxième partie de raccordement par filetage est une douille taraudée (6) complémentaire ou un boulon fileté (5) complémentaire à ceux-ci,
le boulon fileté (5) s'engage dans la douille taraudée (6) pour raccorder la première partie de raccordement par filetage à la deuxième partie de raccordement par filetage, et
le dispositif d'arrêt comporte entre la première partie de raccordement par filetage associée à l'outil (2) ou à l'adaptateur d'outil (3) et la deuxième partie de raccordement par filetage associée au dispositif de prolongation (4), un raccordement par encliquetage à liaison par la forme (7) sous forme de raccordement par encliquetage (7) ou de raccordement coulissant, auquel est associé un dispositif de manipulation (12) qui facilite le détachement du dispositif d'arrêt,
**caractérisé en ce qu'**
on associe au dispositif de manipulation (12) un moyen de rappel (11) à déformation élastique, à l'encontre de la force duquel l'action d'arrêt du raccordement par encliquetage à liaison par la forme (7) est neutralisable.

2. Raccordement par filetage selon la revendication 1,
**caractérisé en ce que**
le raccordement par encliquetage (7) comporte une came (8) qui s'encliquète dans un évidement (9) en ayant un effet d'arrêt lorsque le boulon fileté (5) est vissé dans la douille taraudée (6) à sa position solidement serrée.

3. Raccordement par filetage selon l'une des revendications précédentes,
**caractérisé en ce que**
la came (8) et/ou l'évidement (9) du raccordement par encliquetage (7) sont mobiles axialement, de préférence au moyen d'un manchon d'arrêt (10) mobile à l'encontre de la force d'un ressort (11).

4. Raccordement par filetage selon l'une des revendications précédentes,
**caractérisé en ce que**
la came (8) déplace axialement le manchon d'arrêt (10) pendant le vissage du raccordement par filetage (1).

5. Raccordement par filetage selon l'une des revendications précédentes,
**caractérisé en ce que**
le manchon d'arrêt (10) comporte un dispositif de sécurité anti-torsion (13) et/ou une butée (18, 19) dans la direction du déplacement, une butée (18) étant de préférence sous forme de goupille de serrage (17) commandée par ressort.

6. Raccordement par filetage selon l'une des revendications précédentes 1 à 3,
**caractérisé en ce que**
la came (8) et/ou l'évidement (9) du raccordement par encliquetage (7) comportent un bord incliné (20) qui, si l'action de la force par torsion de l'outil (2) ou de l'adaptateur d'outil (3) contre le dispositif de prolongation (4) est suffisante, neutralise l'action d'arrêt du raccordement par encliquetage (7).

7. Raccordement par filetage selon l'une des revendications 1, 2 ou 6,
**caractérisé en ce que**
la came (8) du raccordement par encliquetage (7) s'encliquète radialement vers l'intérieur dans l'évidement (9).

8. Raccordement par filetage selon l'une des revendications 1, 2 ou 6,
**caractérisé en ce que**
la came (8) du raccordement par encliquetage (7) s'encliquète radialement vers l'extérieur dans l'évidement (9).

9. Raccordement par filetage selon l'une des revendications 1, 2 ou 6 à 8,
**caractérisé en ce que**
l'évidement (9) est en forme de rainure.

10. Raccordement par filetage selon l'une des revendications 1, 2 ou 6 à 8,
**caractérisé en ce que**
l'évidement (9) est en forme de trou.
